# DEMANDE DE BREVET EUROPEEN

(11) **EP 3 338 546 A1**
(43) Date de publication de la demande: **27.06.2018**
(21) Numéro de dépôt: 17207433.8
(22) Date de dépôt: 14.12.2017
(51) Int. Cl.: A01M 7/00

(54) **DISPOSITIF DE DISTRIBUTION DE PRODUIT COMPRENANT UN RÉGULATEUR DE PRESSION**

(30) Priorité: 21.12.2016 FR 1663013
(71) Demandeur: Exel Industries, 75009 Paris (FR)
(72) Inventeur: DUCAMPS, Thibaut, 75009 Paris (FR)
(74) Mandataire: Gaillarde, Frédéric F. Ch.

(57) **Abrégé**

La présente invention concerne dispositif de distribution (1) destiné à distribuer un produit sur une surface telle qu'un terrain agricole, le dispositif de distribution (1) comprenant : au moins un élément de rampe (2) de distribution ; un circuit de distribution (5) du produit comprenant : un orifice d'entrée (7) destiné à être en communication fluidique avec une source du produit ; une pluralité de buses (11) reliées fluidiquement en série, la pluralité de buses (11) étant disposée le long de l'au moins un élément de rampe (2) de distribution, la pluralité de buses (11) étant reliée à l'orifice d'entrée (7) en série, chaque buse de distribution parmi la pluralité de buses (11) de distribution présentant une valeur de pression ; un régulateur de pression (13) configuré pour égaliser les valeurs de pressions de chaque buse parmi la pluralité de buses (11) de pour réguler la pression du produit le long de l'au moins un élément de rampe (2) de distribution ; le régulateur de pression (13) comprenant uniquement : un premier organe de régulation (13a); et un deuxième organe de régulation (13b), chacun des premier et deuxième organes de régulation (13a, 13b) de pression étant relié en série à la pluralité de buses (11) et à l'orifice d'entrée (7), la pluralité de buses (11) étant disposée entre le premier organe de régulation (13a) et le deuxième organe de régulation (13b).

## Description

La présente invention se rapporte à un dispositif de distribution pour engin agricole, agencé pour distribuer un produit sur une surface.

Généralement, les dispositifs de distribution comprennent des buses réparties le long d'une rampe de distribution, le produit étant amené par un circuit de distribution vers les buses à une pression prédéterminée.

Or, il apparaît que lorsque la rampe s'incline pour suivre la configuration de la surface, la pression le long de la rampe varie. Il en résulte une disparité de quantité de produit pulvérisée le long de la rampe de distribution.

Afin de rééquilibrer la pression de sortie des buses le long de la rampe, il est connu d'utiliser un système de régulation de débit le long de la rampe, comprenant un régulateur de débit par ensemble de buse. Ainsi, la pression est régulée pour chaque ensemble de buse lorsque la rampe s'incline.

Toutefois, de tels systèmes sont complexes et couteux, du fait du nombre de régulateurs de débit nécessaires et de la complexité du circuit de commande d'un tel système de régulation. En outre, la régulation de débit est réalisée de façon discrète, et non de façon linéaire le long de la rampe.

La présente invention vise à résoudre tout ou partie des inconvénients mentionnés ci-dessus.

À cet effet la présente invention concerne un dispositif de distribution destiné à distribuer un produit sur une surface telle qu'un terrain agricole, le dispositif de distribution comprenant :
- au moins un élément de rampe de distribution ; - un circuit de distribution du produit comprenant :
   ∘ un orifice d'entrée destiné à être en communication fluidique avec une source du produit ;
   ∘ une pluralité de buses reliées fluidiquement en série, la pluralité de buses étant disposée le long de l'au moins un élément de rampe de distribution, la pluralité de buses étant reliée en série à l'orifice d'entrée, chaque buse de distribution parmi la pluralité de buses de distribution présentant une valeur de pression ;
   ∘ un régulateur de pression configuré pour égaliser les valeurs de pressions de chaque buse parmi la pluralité de buses pour réguler la pression du produit le long de l'au moins un élément de rampe de distribution lorsque cet élément de rampe s'incline par rapport à l'horizontale ;
- le régulateur de pression comprenant uniquement :
- un premier organe de régulation ; et
- un deuxième organe de régulation,
chacun des premier et deuxième organes de régulation de pression étant relié en série à la pluralité de buses et à l'orifice d'entrée, la pluralité de buses étant disposée entre le premier organe de régulation et le deuxième organe de régulation.

Grâce aux dispositions selon l'invention, uniquement deux organes de régulation sont nécessaires pour égaliser la pression le long d'un tronçon de rampe en fonction de son inclinaison par rapport à l'horizontale. La mise en oeuvre d'un tel dispositif est donc économique. Ces dispositions permettent également d'égaliser la pression le long de la rampe, en entrée de chaque buse de la pluralité de buses. Ainsi, le débit en sortie de chaque buse de la pluralité de buses est égalisé de manière à être uniforme le long de la rampe.

On entend par élément de rampe, un élément rigide selon un plan vertical.

Selon un aspect de l'invention, l'au moins un élément de rampe est monobloc.

Selon un aspect de l'invention, l'au moins un élément de rampe est apte à s'incliner par rapport à un plan horizontal selon une inclinaison, de façon à s'adapter à l'inclinaison de la surface d'un champ.

Selon un aspect de l'invention, l'inclinaison est comprise entre 0 et 30°.

Selon un aspect de l'invention, le dispositif de distribution comprend une cuve de stockage du produit.

Selon un aspect de l'invention, la cuve de stockage est reliée fluidiquement à l'orifice d'entrée.

Selon un aspect de l'invention, le dispositif de distribution comprend un capteur de régulation configuré pour mesurer une grandeur physique caractéristique de l'élément de rampe ou du circuit de distribution.

Grâce à ces dispositions il est possible de connaître une grandeur physique caractéristique de l'élément de rampe ou du circuit de distribution, le long de la pluralité de buses et ainsi d'égaliser la pression le long du circuit de distribution et donc d'égaliser le débit de sortie de la pluralité de buses.

Selon un aspect de l'invention, la grandeur physique caractéristique mesurée par le capteur de régulation est la pression dans le circuit de distribution du produit ou l'inclinaison de l'élément de rampe.

Selon un aspect de l'invention, le capteur de régulation comprend au moins deux capteurs de pression disposés de part et d'autre de la pluralité de buses.

Grâce à ces dispositions il est possible de connaître la pression de part et d'autre de la pluralité de buses et ainsi d'égaliser la pression le long du circuit de distribution et donc d'égaliser le débit de sortie de la pluralité de buses.

Selon un aspect de l'invention, l'au moins un élément de rampe comprend une première portion d'extrémité et une deuxième portion d'extrémité.

Selon un aspect de l'invention, l'un des deux capteurs de pression est disposé au niveau de la première portion d'extrémité de l'au moins un élément de rampe de distribution et un autre des au moins deux capteurs de pression est disposé au niveau de la deuxième portion d'extrémité.

Selon un aspect de l'invention, le circuit de distribution comprend un orifice de retour et un organe de fermeture configuré pour occuper :
- une position fermée, dans laquelle l'organe de fermeture bouche l'orifice de retour, de façon à maintenir la pression dans le circuit de distribution lorsque la pluralité de buses distribue le produit sur la surface ;
- une position ouverte, dans laquelle l'organe de fermeture libère l'orifice de retour.

Grâce à ces dispositions, la pression dans le circuit de distribution lors de la distribution de produit est maintenue et la distribution de produit est mieux répartie le long de l'au moins un élément de rampe.

Selon un aspect de l'invention, l'orifice de retour est relié fluidiquement à la cuve de stockage.

Lorsque la distribution de produit sur la surface est terminée, il convient de nettoyer le dispositif de distribution. De l'eau claire est alors introduite dans la cuve de stockage, et passe ensuite dans le circuit de distribution de façon à le nettoyer, pour revenir à la cuve de stockage par l'orifice de retour.

Selon un aspect de l'invention, le circuit de distribution comprend un gicleur, relié fluidiquement en série aux buses de façon à limiter le débit du produit

Ces dispositions permettent de renseigner la valeur de la perte de charge et de réguler la perte de charge.

Selon un aspect de l'invention, la perte de charge peut être naturelle, due aux pertes de charges naturelles dans le circuit de distribution, notamment due aux restrictions, défauts de surface ou angles, ou artificielle, assurée par exemple par des gicleurs qui permettent de réguler la pression.

Selon un aspect de l'invention, le dispositif de distribution comprend une unité de contrôle électronique configurée pour commander les premier et deuxième organes de régulation.

Ainsi, la régulation de la pression dans le circuit de distribution est réalisée automatiquement.

Selon un aspect de l'invention, l'unité de contrôle électronique est configurée pour traiter des valeurs de la grandeur physique mesurée par le capteur de régulation et de façon à commander les premier et deuxième organes de régulation.

Ainsi, la régulation de la pression dans le circuit de distribution est réalisée automatiquement, grâce aux mesures du capteur de régulation.

Selon un aspect de l'invention, les premier et deuxième organes de régulation comprennent chacun une vanne réglable, automatique à commande électrique ou électronique, agencée pour être commandée par l'unité de contrôle électronique.

Selon un aspect de l'invention, les premier et deuxième organes de régulation comprennent chacun une vanne réglable, et le dispositif de distribution comprend une unité de contrôle électronique, l'unité de contrôle électronique étant configurée pour commander les vannes réglables.

Ainsi, il est possible de régler chaque vanne réglable de façon à obtenir une pression identique de fluide en sortie de chacune des vannes réglables.

Selon un aspect de l'invention, l'unité de contrôle électronique est configurée pour commander les vannes réglables en fonction d'une valeur de consigne.

Selon un aspect de l'invention, la vanne réglable de chacun des premier et deuxième organes de régulation est par exemple une vanne à boisseau.

Selon un aspect de l'invention, chacune des vannes réglables comprend une première voie d'alimentation de la pluralité de buses.

Selon un aspect de l'invention, chacune des vannes réglables comprend une deuxième voie de retour.

Selon un aspect de l'invention, chacune des vannes réglables est reliée électriquement à l'unité de contrôle électronique.

Selon un aspect de l'invention, l'unité de contrôle électronique est configurée pour comparer les valeurs de pression de chacune des vannes réglables entre elles, ou bien à une valeur de consigne.

Selon un aspect de l'invention, l'unité de contrôle électronique est configurée pour commander chacune des vannes réglables de façon à égaliser la pression en sortie des vannes réglables.

Selon un aspect de l'invention, le dispositif de distribution comprend un élément de régulation en alimentation configuré pour réguler l'alimentation en produit du circuit de distribution de façon à compenser les variations de vitesse de l'engin agricole.

Selon un aspect de l'invention, l'élément de régulation en alimentation est électrique, mécanique ou pneumatique.

Selon un aspect de l'invention, l'élément de régulation en alimentation comprend une vanne configurée pour renvoyer l'excédent de produit au sein du circuit de distribution dans la cuve de stockage.

Selon un aspect de l'invention cette vanne est une vanne trois voies.

Selon un aspect de l'invention, l'élément de régulation en alimentation est configuré pour régler la vitesse d'une pompe d'alimentation du circuit de distribution de façon à régler le débit au niveau de l'orifice d'entrée du circuit de distribution.

Selon un aspect de l'invention, les premier et deuxième organes de régulation comprennent chacun une vanne automatique à commande pneumatique.

Grâce à ces dispositions, la régulation de la pression dans le circuit de distribution est réalisée automatiquement et sans utiliser d'électronique, permettant un allègement du dispositif de distribution et moins de risques liés à des pannes électriques

Selon un aspect de l'invention, les vannes automatiques à commande pneumatique des premier et deuxième organes de régulation sont soumises à une valeur de consigne de pression identique.

Selon un aspect de l'invention, les vannes automatiques comprennent chacune deux espaces et une membrane souple agencée pour séparer les deux espaces.

Selon un aspect de l'invention, un premier espace parmi les deux espaces est configuré pour recevoir de l'air ayant une valeur de pression prédéterminée.

Selon un aspect de l'invention, un deuxième espace parmi les deux espaces est configuré pour recevoir le fluide à distribuer.

Selon un aspect de l'invention, les premiers espaces de chacune des vannes automatique son reliées par un circuit pneumatique.

Selon un aspect de l'invention, les mouvements de la membrane souple permettent l'ajustement de la pression au niveau de chacune des vannes automatiques.

Selon un aspect de l'invention, le dispositif de distribution comprend un élément de rampe primaire et un élément de rampe secondaire, l'élément de rampe primaire comprenant un régulateur de pression primaire et l'élément de rampe secondaire comprenant un régulateur de pression secondaire.

Grâce à ces dispositions les éléments de rampe peuvent réaliser la distribution de produit sur un grand nombre de configuration de surface. Les éléments de rampe primaire et secondaire peuvent en effet présenter des inclinaisons différentes.

Selon un aspect de l'invention, le dispositif de distribution comprend un élément de rampe primaire et un élément de rampe secondaire, l'élément de rampe primaire comprenant un régulateur de pression primaire et l'élément de rampe secondaire comprenant un régulateur de pression secondaire, le deuxième organe de régulation du régulateur de pression primaire et le premier organe de régulation du régulateur de pression secondaire étant confondus.

Grâce à ces dispositions les éléments de rampe peuvent réaliser la distribution de produit dans une configuration en forme de V, en forme de V inversé ou en forme dissymétrique.

La présente invention se rapporte en outre à un engin agricole comprenant un dispositif de distribution conforme à l'une quelconque des caractéristiques susmentionnées.

D'autres caractéristiques et avantages de l'invention apparaîtront à la lecture de la description détaillée qui suit pour la compréhension de laquelle on se reportera aux dessins annexés dans lesquels :
- la figure 1 représente un engin agricole selon l'invention ;
- la figure 2 représente un circuit de distribution disposé le long d'un élément de rampe ;
- la figure 3 représente un circuit de distribution disposé le long de deux éléments de rampe selon un premier mode de réalisation,
- la figure 4 représente un circuit de distribution disposé le long de deux éléments de rampe selon un deuxième mode de réalisation.

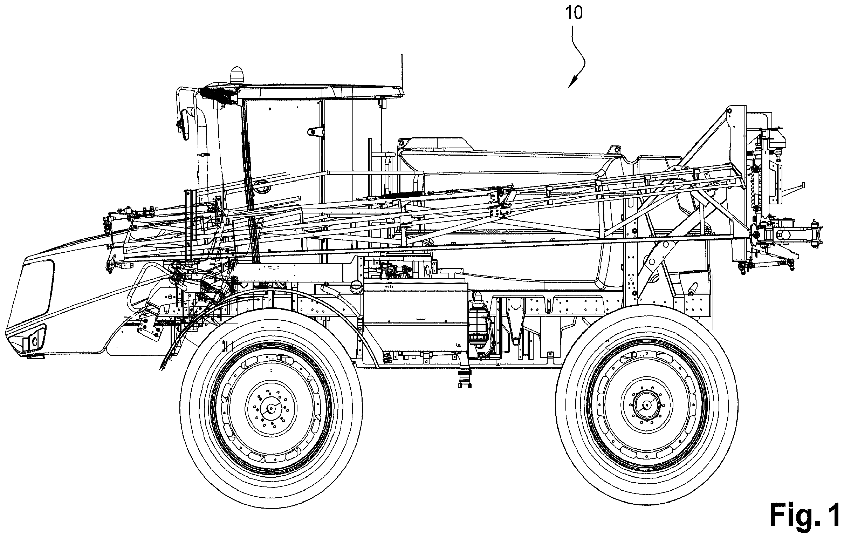

La figure 1 représente un engin agricole 10 comprenant un dispositif de distribution 1 selon l'invention.

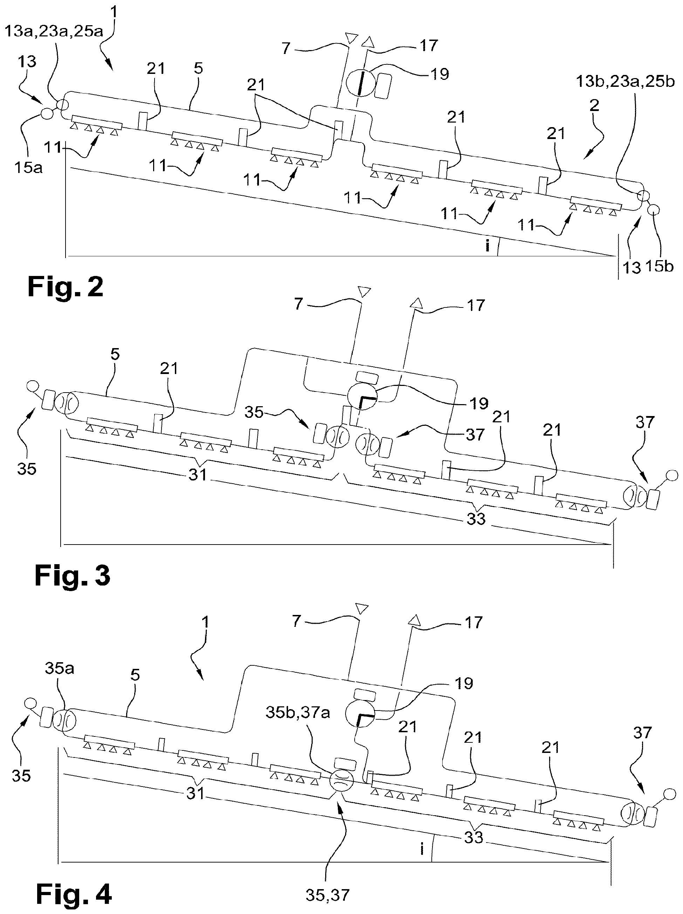

La figure 2 représente un dispositif de distribution 1 destiné à distribuer un produit sur une surface telle qu'un terrain agricole selon l'invention. Le dispositif de distribution est configuré pour être installé sur un engin agricole 10. Le dispositif de distribution 1 comprend un élément de rampe 2 de distribution. L'élément de rampe 2 est rigide selon un plan vertical. Par exemple, l'élément de rampe 2 peut être monobloc. L'élément de rampe 2 est apte à s'incliner par rapport à un plan horizontal d'une inclinaison i, de façon à s'adapter à l'inclinaison de la surface. L'inclinaison i est par exemple comprise entre 0 et 30°.

Le dispositif de distribution 1 comprend en outre un circuit de distribution 5 du produit.

Le circuit de distribution 5 comprend un orifice d'entrée 7 destiné à être en communication fluidique avec une source du produit. En effet, le dispositif de distribution 1 comprend une cuve de stockage du produit (non représentée). La cuve de stockage est reliée fluidiquement l'orifice d'entrée 7.

Le circuit de distribution 5 comprend une pluralité de buses 11 reliées fluidiquement en série. La pluralité de buses 11 est disposée le long de l'élément de rampe 2. La pluralité de buses 11 est reliée à l'orifice d'entrée 7 en série. Chaque buse de distribution parmi la pluralité de buses 11 présente une valeur de pression.

Le circuit de distribution 5 comprend en outre un régulateur de pression 13 configuré pour égaliser les valeurs de pressions de chaque buse parmi la pluralité de buses 11 de pour réguler la pression du produit le long d'un élément de rampe 2 lorsque cet élément de rampe s'incline par rapport à l'horizontale.

Le régulateur de pression 13 comprend uniquement un premier organe de régulation 13a et un deuxième organe de régulation 13b. Chacun des premier et deuxième organes de régulation 13a, 13b est relié en série à la pluralité de buses 11 et à l'orifice d'entrée 7. La pluralité de buses 11 est disposée entre le premier organe de régulation 13a et le deuxième organe de régulation 13b.

Le circuit de distribution 5 comprend un capteur de régulation 14 comprenant deux capteurs de pression 15a, 15b disposés au niveau de portions d'extrémité de l'élément de rampe 2, c'est-à-dire de part et d'autre de la pluralité de buses 11 disposée le long de l'élément de rampe 2. Ainsi, il est possible de connaître la pression aux extrémités de la rampe et ainsi d'égaliser la pression le long du circuit de distribution 5 et donc d'égaliser le débit de sortie de la pluralité de buses 11, lorsque l'élément de rampe 2 s'incline.

Selon un autre mode de réalisation, le capteur de régulation comprend un inclinomètre, agencé pour mesurer l'inclinaison de l'élément de rampe.

Les premier et deuxième organes de régulation 13a, 13b comprennent chacun une vanne réglable 23a, 23b. La vanne réglable 23a, 23b de chacun des premier et deuxième organes de régulation 13a, 13b est par exemple une vanne à boisseau. Le dispositif de distribution comprend une unité de contrôle électronique, l'unité de contrôle électronique étant configurée pour commander les vannes réglables 23a, 23b. L'unité de contrôle électronique est ainsi reliée électroniquement aux capteurs de pression 15a, 15b et aux vannes réglables 23a, 23b. L'unité de contrôle électronique est configurée pour commander les vannes réglables 23a, 23b de façon à égaliser les valeurs de pression en sortie de la pluralité de buses 11. En effet, les capteurs de pression 15a, 15b communiquent les valeurs de pression enregistrée périodiquement ou en continu à l'unité de contrôle électronique. L'unité de contrôle électronique compare les valeurs de pression. Si les valeurs de pression de chacun des capteurs de pression 15a, 15b sont identiques, l'unité de contrôle électronique n'envoie aucune commande aux vannes réglables 23a, 23b. Si les valeurs de pression de chacun des capteurs de pression 15a, 15b sont différentes, l'unité de contrôle électronique envoie une commande à la vanne réglable la plus basse par rapport à la verticale de façon à modifier son ouverture, permettant d'égaliser les pressions en sortie des vannes réglables. Il est ainsi possible de régler l'ouverture de chaque vanne réglable 23a, 23b de façon à obtenir une pression identique de fluide en sortie de chacune des vannes réglables 23a, 23b et donc un débit identique en sortie de la pluralité de buses 11.

Le régulateur de pression peut comprendre en outre une interface utilisateur. L'interface utilisateur est reliée électroniquement à l'unité de contrôle électronique. L'interface utilisateur permet à l'utilisateur de suivre l'évolution des valeurs de pression au niveau des capteurs de pression 15a, 15b.

Selon un autre mode de réalisation, l'unité de contrôle électronique peut également commander les vannes réglables en fonction d'une valeur de consigne de pression. Ce mode de réalisation diffère du mode de réalisation précédent en ce que l'utilisateur entre une valeur de consigne dans l'interface utilisateur. Lorsque l'engin agricole distribue le produit sur la surface, l'unité de contrôle électronique commande les vannes réglables 23a, 23b de façon à ce que les valeurs de pression au niveau des capteurs de pression 15a, 15b soient identiques à la valeur de consigne.

Chacune des vannes réglables 23a, 23b comprennent une première voie d'alimentation des buses. Chacune des vannes réglables 23a, 23b peut comprendre une deuxième voie de retour.

Le dispositif de distribution 1 peut comprendre en outre un élément de régulation en alimentation configuré pour réguler l'alimentation en produit du circuit de distribution 5 de façon à compenser les variations de vitesse de l'engin agricole 10. L'élément de régulation en alimentation peut être électrique, mécanique ou pneumatique. L'élément de régulation en alimentation peut par exemple comprendre une pompe. L'élément de régulation en alimentation peut également comprendre une vanne trois voies configurée pour renvoyer l'excédent de produit au sein du circuit de distribution 5 dans la cuve de stockage. L'élément de régulation en alimentation est configuré pour régler la vitesse d'une pompe d'alimentation du circuit de distribution 5 de façon à régler le débit au niveau de l'orifice d'entrée 7 du circuit de distribution 5.

Selon un autre mode de réalisation, les premier et deuxième organes de régulation 13a, 13b comprennent chacun une vanne automatique 25a, 25b à commande pneumatique. Ce mode de réalisation diffère des modes de réalisation précédents en ce que les vannes automatiques 25a, 25b comprennent chacune deux espaces et une membrane souple agencée pour séparer les deux espaces. Un premier espace parmi les deux espaces est configuré pour recevoir de l'air ayant une valeur de pression prédéterminée. Un deuxième espace parmi les deux espaces est configuré pour recevoir le fluide à distribuer. Ainsi, grâce à la membrane souple, la pression dans le premier espace influe sur la pression dans le deuxième espace, permettant ainsi de réguler la pression de produit le long du circuit de distribution 5.

Les premiers espaces de chacune des vannes automatiques sont reliés par un circuit pneumatique. Le circuit pneumatique présente une valeur de pression soumise à une valeur de consigne. La valeur de consigne peut être définie soit manuellement par l'utilisateur par l'intermédiaire de l'interface utilisateur, soit par un boîtier de commande. En effet, la valeur consigne peut être calculée automatiquement par le boîtier de commande en fonction des valeurs de pression relevées par les capteurs de pressions 15a, 15b, de valeurs de débit instantané mesuré par d'autres capteurs, de la vitesse de l'engin agricole et/ou de toute autre information servant à réguler le débit. La membrane souple permet ensuite l'ajustement de la pression au niveau de chacune des vannes automatiques. En effet, les mouvements de l'une des membranes souples est perçu par l'autre membrane souple par le circuit pneumatique. Le circuit pneumatique ayant la même pression en tout point, l'égalisation des pressions dans le circuit pneumatique se réalise automatiquement. Par compensation, la pression dans le circuit de distribution 5 s'égalise également automatiquement. Ainsi, une unité de contrôle électronique et les liaisons électroniques ne sont pas nécessaires. Il en résulte que le dispositif de distribution est moins couteux et moins sujet à des dysfonctionnements de nature électronique.

Le boîtier de commande peut également commander l'élément de régulation en alimentation.

Le circuit de distribution 5 comprend un orifice de retour 17 et un organe de fermeture 19. L'organe de fermeture peut occuper une position fermée et une position ouverte. Dans la position fermée, l'organe de fermeture 19 bouche l'orifice de retour 17, de façon à maintenir la pression dans le circuit de distribution 5 lorsque la pluralité de buses 11 distribue le produit sur la surface. Dans la position ouverte, l'organe de fermeture 19 libère l'orifice de retour 17 afin de permettre par exemple le nettoyage du circuit de distribution 5. Ainsi, la pression dans le circuit de distribution 5 lors de la distribution de produit est maintenue et la distribution de produit est mieux répartie le long de l'élément de rampe 2.

L'orifice de retour 17 est relié fluidiquement à la cuve de stockage. Lorsque la distribution de produit sur la surface est terminée, il convient de nettoyer le dispositif de distribution 1. De l'eau claire est alors introduite dans la cuve de stockage, et passe ensuite dans le circuit de distribution 5 pour revenir à la cuve de stockage par l'orifice de retour 17.

Le circuit de distribution 5 comprend un gicleur 21 relié fluidiquement en série à la pluralité de buses 11 de façon à limiter le débit du produit. Par exemple, un gicleur peut être disposé entre chaque buse ou groupe de buses. Ainsi, il est possible de connaître la valeur de la perte de charge ou bien d'augmenter la perte de charge artificiellement. Le gicleur 21 artificiel peut être placé dans le circuit de distribution 5 en complément des pertes de charge naturelles, en cas de forte compensation à obtenir.

Un autre mode de réalisation est représenté en figure 3. Ce mode de réalisation diffère des modes de réalisation précédents en ce que le dispositif de distribution 1 comprend un élément de rampe primaire 31 et un élément de rampe secondaire 33. L'élément de rampe primaire 31 comprend un régulateur de pression primaire 35 et l'élément de rampe secondaire 33 comprend un régulateur de pression secondaire 37. Ainsi, les éléments de rampe primaire et secondaire 31, 33 peuvent réaliser la distribution de produit sur un grand nombre de configuration de surface. Les éléments de rampe primaire et secondaire 31, 33 peuvent en effet présenter des inclinaisons différentes.

Un autre mode de réalisation est représenté en figure 4. Le dispositif de distribution comprend également un élément de rampe primaire 31 et un élément de rampe secondaire 33. L'élément de rampe primaire 31 comprend un régulateur de pression primaire 35 comprenant un premier organe de régulation 35a et un deuxième organe de régulation 35b. L'élément de rampe secondaire 33 comprenant un régulateur de pression secondaire 37 comprenant un premier organe de régulation 37a et un deuxième organe de régulation 37b. Ce mode de réalisation diffère des modes de réalisation précédents en ce que le deuxième organe de régulation 35b du régulateur de pression primaire 35 et le premier organe de régulation 37a du régulateur de pression secondaire 37 étant confondus. Ainsi, les éléments de rampe primaire et secondaire 35, 37 peuvent réaliser la distribution de produit dans une configuration en forme de V ou en forme de V inversé. Ces dispositions permettent de s'adapter à des configurations de surface symétriques et d'économiser un organe de régulation.

Bien entendu la présente invention ne se limite pas aux modes de réalisation mentionnés ci-dessus, décrits à titre d'exemples illustratifs et non limitatifs.

## Revendications

1. Dispositif de distribution (1) destiné à distribuer un produit sur une surface telle qu'un terrain agricole, le dispositif de distribution (1) comprenant :
- au moins un élément de rampe (2) de distribution ;
- un circuit de distribution (5) du produit comprenant :
∘ un orifice d'entrée (7) destiné à être en communication fluidique avec une source du produit ;
∘ une pluralité de buses (11) reliées fluidiquement en série, la pluralité de buses (11) étant disposée le long de l'au moins un élément de rampe (2) de distribution, la pluralité de buses (11) étant reliée à l'orifice d'entrée (7) en série, chaque buse de distribution parmi la pluralité de buses (11) de distribution présentant une valeur de pression ;
∘ un régulateur de pression (13, 35, 37) configuré pour égaliser les valeurs de pressions de chaque buse parmi la pluralité de buses (11) pour réguler la pression du produit le long de l'au moins un élément de rampe (2) de distribution lorsque cet élément de rampe (2) s'incline par rapport à l'horizontale ;
le régulateur de pression (13, 35, 37) comprenant uniquement :
- un premier organe de régulation (13a, 35a, 37a); et
- un deuxième organe de régulation (13b, 35b, 37b),
chacun des premier et deuxième organes de régulation (13a, 13b, 35a, 35b, 37a, 37b) de pression étant relié en série à la pluralité de buses (11) et à l'orifice d'entrée (7), la pluralité de buses (11) étant disposée entre le premier organe de régulation (13a, 35a, 37a) et le deuxième organe de régulation (13b, 35b, 37b).

2. Dispositif de distribution selon la revendication 1, comprenant un capteur de régulation (15a, 15b) de part et d'autre de la pluralité de buses (11) configuré pour mesurer une grandeur physique caractéristique de l'élément de rampe ou du circuit de distribution.

3. Dispositif de distribution selon la revendication 2, dans lequel la grandeur physique caractéristique mesurée par le capteur de régulation (15a, 15b) est la pression dans le circuit de distribution du produit et/ou l'inclinaison de l'élément de rampe.

4. Dispositif de distribution selon l'une des revendications 1 à 3, comprenant un orifice de retour (17) et un organe de fermeture (19) configuré pour occuper :
- une position fermée, dans laquelle l'organe de fermeture (19) bouche l'orifice de retour (17), de façon à maintenir la pression dans le circuit de distribution (5) lorsque la pluralité de buses (11) distribue le produit sur la surface ;
- une position ouverte, dans laquelle l'organe de fermeture (19) libère l'orifice de retour (17).

5. Dispositif de distribution selon l'une des revendications précédentes, comprenant un élément de régulation en alimentation configuré pour réguler l'alimentation en produit du circuit de distribution de façon à compenser les variations de vitesse de l'engin agricole.

6. Dispositif de distribution selon l'une des revendications précédentes, comprenant au moins un gicleur (21), relié fluidiquement en série à la pluralité de buses (11) de façon à réguler le débit du produit.

7. Dispositif de distribution selon l'une des revendications précédentes, comprenant une unité de contrôle électronique configurée pour commander les premier et deuxième organes de régulation (13a, 13b, 35a, 35b, 37a, 37b).

8. Dispositif de distribution selon la revendication 7, dans lequel l'unité de contrôle électronique est configurée pour traiter des valeurs de la grandeur physique mesurée par le capteur de régulation (15a, 15b) et de façon à commander les premier et deuxième organes de régulation (13a, 13b, 35a, 35b, 37a, 37b).

9. Dispositif de distribution selon l'une des revendications précédentes, dans lequel les premier et deuxième organes de régulation (13a, 13b, 35a, 35b, 37a, 37b) comprennent chacun une vanne réglable (23a, 23b), automatique à commande électrique ou électronique, agencée pour être commandée par l'unité de contrôle électronique.

10. Dispositif de distribution selon l'une des revendications 1 à 8, dans lequel les premier et deuxième organes de régulation (13a, 13b, 35a, 35b, 37a, 37b) comprennent chacun une vanne automatique (25a, 25b) à commande pneumatique.

11. Dispositif de distribution selon la revendication 10, dans lequel les vannes automatiques (25a, 25b) à commande pneumatique des premier et deuxième organes de régulation (13a, 13b, 35a, 35b, 37a, 37b) sont soumises à une valeur de consigne de pression identique.

12. Dispositif de distribution selon l'une des revendications précédentes, comprenant un élément de rampe primaire (31) et un élément de rampe secondaire (33), l'élément de rampe primaire (31) comprenant un régulateur de pression primaire (35) et l'élément de rampe secondaire (33) comprenant un régulateur de pression secondaire (37).

13. Dispositif de distribution selon la revendication précédente, comprenant un élément de rampe primaire (31) et un élément de rampe secondaire (33), l'élément de rampe primaire (31) comprenant un régulateur de pression primaire (35) et l'élément de rampe secondaire (33) comprenant un régulateur de pression secondaire (37), le deuxième organe de régulation (35b) du régulateur de pression primaire (35) et le premier organe de régulation (37a) du régulateur de pression secondaire (37) étant confondus.

14. Engin agricole comprenant un dispositif de distribution conforme à l'une quelconque des revendications précédentes.
